# EUROPÄISCHE PATENTSCHRIFT

(11) **EP 2 083 242 B1**
(45) Veröffentlichungstag und Bekanntmachung des Hinweises auf die Patenterteilung: **25.05.2011**
(21) Anmeldenummer: 08167888.0
(22) Anmeldetag: 30.10.2008
(51) Int. Cl.: G01B 3/06

(54) **Verfahren zur Herstellung eines Gliedermaßstabs aus Holz**
Method of manufacture of a folding yardstick made of wood
Procédé de fabrication d'un mètre pliant en bois

(30) Priorität: 22.01.2008 DE 102008005581
(43) Veröffentlichungstag der Anmeldung: 29.07.2009
(73) Patentinhaber: Adga Adolf Gampper GmbH, 74535 Mainhardt (DE)
(72) Erfinder: GAMPPER, Roland, 74535, Mainhardt (DE)
(74) Vertreter: Wolf, Eckhard

(56) Entgegenhaltungen:
- AU-B2- 767 732
- CH-A- 431 108
- DE-A1- 4 109 412
- DE-C- 857 276
- FR-A- 2 799 679
- US-A1- 2005 045 586

## Beschreibung

Die Erfindung bezieht sich auf ein Verfahren zur Herstellung eines Gliedermaßstabs mit mehreren als langgestreckte Flachstäbe aus Holz ausgebildeten, mit Skalenmarkierungen versehenen Maßstabsgliedern, die paarweise an Rastgelenken miteinander verbunden sind. Im Folgenden werden die Breitseitenflächen der Maßstabsglieder auch als Gliederflächen und die Schmalseiten auch als Kanten bezeichnet.

Gliedermaßstäbe sind in ihrem ausgeklappten gestreckten Zustand verkörperte Längenmaße, deren Endmaß durch die beiden voneinander abgewandten stirnseitigen Endflächen der Endglieder gebildet sind. Die Endglieder müssen ebenso wie die als Strichmarken ausgebildeten Skalenmarkierungen senkrecht zur Längserstreckung des ausgeklappten Gliedermaßstabes ausgerichtet sein. Neben den Skalenmarkierungen tragen Gliedermaßstäbe häufig auch Werbeaufdrucke. Bei bekannten Gliedermaßstäben werden sowohl die Skalenmarkierungen als auch die Werbeaufdrucke in Form von Druckfarben auf die Gliederflächen aufgedruckt. Die Druckfarben müssen nach dem Aufdrucken trocknen. Sie können beim Transport der Maßstabsglieder verschmieren oder verzogen werden. Bei unterschiedlichen Farbmengen können unterschiedliche Druckerscheinungen auftreten, die zu Ungenauigkeiten führen. Wenn das Holz an der Oberfläche nicht völlig glatt ist, können durch die Oberflächenrauhigkeit Farbverschiebungen auftreten, die ebenfalls zu einem undeutlichen Ablesen führen. Weiter unterliegen die aufgedruckten Skalenmarkierungen durch den Gebrauch des Gliedermaßstabs einer Abnutzung, die zur Unleserlichkeit und zu Ableseungenauigkeiten führen kann. Um diesen Nachteil zu vermeiden, wurde bereits vorgeschlagen, den Gliedermaßstab zu lackieren. Die Lackierung erfolgt nach dem Skalenaufdruck und hat vor allem die Funktion, den Skalenaufdruck gegen Abrieb durch mechanische Einflüsse und gegen Feuchtigkeit zu schützen. Die Lackierung hat außerdem die Funktion, dass die Oberfläche des Maßstabsholzes glatter und dadurch in seinem Erscheinungsbild verbessert wird. Als Lackierung verwendet man zweckmäßig einen mattglänzenden Klarlack, der in getrocknetem Zustand eine gewisse Härte aufweist und eine spiegelfreie Ablesung des Skalenaufdrucks ermöglicht. Der Skalenaufdruck wird bei holzfarbenen Gliedermaßstäben direkt auf das Holz aufgebracht. Weiter kann ein Bedarf bestehen, das Maßstabsholz einzufärben. Diese Einfärbung muss vor dem Skalenaufdruck durchgeführt werden.

Der Verfahrensablauf bei der Fertigung von Gliedermaßstäben ist bisher wie folgt: Zunächst werden die Maßstabsglieder bei Bedarf mit einer gewünschten Farbe eingefärbt. Die eingefärbten Maßstabsglieder können erst nach einer gewissen Trocknungszeit einer weiteren Handhabung zugeführt werden. Vor dem Bedrucken mit den Skalenmarkierungen und eventuellen Werbeaufdrucken kann außerdem eine Nachhärtung erforderlich sein, die einige Zeit in Anspruch nehmen kann.

In einem weiteren Arbeitsschritt wird der Skalenaufdruck im Durchlauf aufgebracht. Um ein Verschmieren des Skalenaufdrucks zu vermeiden, wird dieser mit einem Klarlack fixiert. Zum Trocknen benötigt der Klarlack dann eine gewisse Zeit, bevor die auf diese Weise vorkonfektionierten Maßstabsglieder an ihren Gelenken zusammengefügt werden können.

Das Gravieren von Skalenmarkierungen auf einen hölzernen Gliedermaßstab ist aus der Patentschrift CH 431 108 bekannt, während die Patentschrift FR 2 799 679 eine wahlweise durch thermisches Gravieren erzeugte Skala auf einem hölzernen Schaufelstiel zeigt. Das Dokument DE 857 276 zeigt ein übliches Herstehungsverfahren von Gliedermaßstäben, bei dem das Aufbringen der Skala vor dem Verbinden der einzelnen Maßstabsglieder geschieht.

Ausgehend hiervon liegt der Erfindung die Aufgabe zugrunde, die Gliedermaßstäbe der eingangs angegebenen Art dahingehend zu verbessern, dass sie einer geringeren Verschleißgefahr unterliegen und einfacher herstellbar sind. Weiterhin sollen Einsparungen im Fertigungsablauf erzielt werden.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die erfindungsgemäße Lösung geht vor allem von dem Gedanken aus, dass die Skalenmarkierungen unter Bildung von Vertiefungen in die Breitseitenflächen der Flachstäbe eingraviert oder eingebrannt werden. Beim Gravier- oder Einbrennvorgang treten im Holz durch erhöhte Temperaturen chemische Veränderungen auf, die zu einer dunklen Verfärbung führen. Auf diese Weise erhält man an den Stellen der Skalenmarkierungen dauerhaft verbleibende Vertiefungen und Verfärbungen im Holz, die beim Bewegen der Maßstabsglieder keinem die Lesbarkeit einschränkenden Abrieb unterliegen.

Die erfindungsgemäße Lösung besteht demgemäß im Wesentlichen darin, dass die Skalenmarkierungen durch dauerhafte gravurartige Vertiefungen in den Breitseitenflächen der Maßstabsglieder gebildet sind. Die Lösung besteht weiterhin darin, daß die Flachstäbe zunächst unter Bildung eines Gliederstabs paarweise miteinander verbunden und anschließend mit der Skalenmarkierung versehen werden. Gemäß einer bevorzugten oder alternativen Ausgestaltung der Erfindung sind die Skalenmarkierungen in das Holz der Maßstabsglieder thermisch eingebrannt. Außerdem können die Maßstabsglieder an ihren Schmalseiten mit zum Teil stabübergreifenden Kantengravuren versehen sein. Im Bereich der Vertiefungen, Gravuren und/oder Einbrennstellen ist das Holz der Maßstabsglieder dunkel verfärbt. Die Maßstabsglieder tragen zweckmäßig eine in die Vertiefungen und/oder Einbrennstellen reichende Farb- und/oder Lackschicht.

Eine bevorzugte Ausgestaltung der Erfindung sieht vor, dass die Farb- und/oder Lackschicht vor dem Gravier- oder Einbrennvorgang auf die Flachstäbe aufgetragen wird.

Gemäß einer bevorzugten Ausgestaltung der Erfindung werden die Vertiefungen mit einem computergesteuerten Laserstrahl in das Holz der Flachstäbe eingraviert oder eingebrannt. Zur Erzeugung des Laserstrahls wird beispielsweise ein als Beschriftungslaser ausgebildeter CO₂-Laser, YAG-Laser oder Diodenlaser verwendet.

Eine weitere vorteilhafte Ausgestaltung der Erfindung sieht vor, dass im Zuge der Fertigung des Gliedermaßstabes die beiden Endglieder an ihren freien stirnseitigen Enden durch ein thermisches Trennverfahren auf Endmaß abgelängt und zugleich an der Trennstelle thermisch porenversiegelt werden. Die Endglieder werden dabei bevorzugt mittels eines über die Trennstelle bewegten Laserstrahls auf Endmaß abgelängt und thermisch porenversiegt.

Eine Weiterbildung der Erfindung sieht vor, dass die Flachstäbe des zusammengeklappten Gliedermaßstabs an ihren Schmalseiten gemeinsam mit einer flächig wirkenden Kantengravur versehen werden. Auch die Kantengravur kann mit einem computergestützten Laserstrahl in die Schmalseiten der Flachstäbe eingebracht werden.

Im Folgenden wird die Erfindung anhand eines in der Zeichnung in schematischer Weise dargestellten Ausführungsbeispiels näher erläutert. Es zeigen
- Fig. 1: eine Seitenansicht eines Holzgliedermaßstabs;
- Fig. 2: eine Draufsicht auf eines der Endglieder des Gliedermaßstabs nach Fig. 1;
- Fig. 3: einen Teilschnitt durch das stirnseitige Ende des Endglieds in vergrößerter ausschnittsweiser Darstellung.

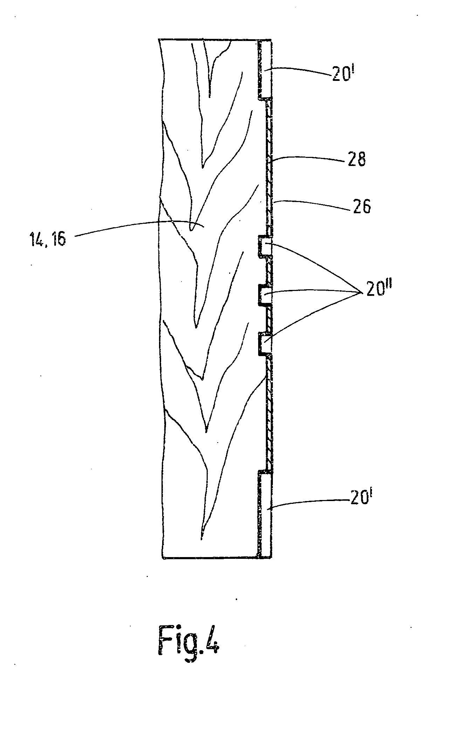

- Fig. 4: einen Schnitt entlang der Schnittlinie IV-IV der Fig. 2;

Der in der Zeichnung dargestellte Gliedermaßstab besteht aus einer größeren Anzahl, beispielsweise aus zehn in der Nähe ihrer Gliedenden 10, 10' im Abstand von den stirnseitigen Gliedkanten 11 mittels Nietbolzen 12 paarweise gelenkig miteinander verbundenen Maßstabsgliedern 14, 16 aus Holz. Die Nietbolzen 12 greifen durch miteinander fluchtende Gelenkbohrungen 18 in den Maßstabsgliedern 14, 16 hindurch, stützen sich mit ihren Köpfen an den Breitseitenflächen der Maßstabsglieder ab und drücken diese an ihren einander zugewandten Breitseitenflächen gegeneinander. Ein im Bereich der miteinander verbundenen Gliedenden angeordneter Rastmechanismus 38 sorgt dafür, dass die Maßstabsglieder 14, 16 in ihren Parallellagen miteinander verrasten und dass in den Zwischenlagen eine definierte Reibung oder Bremskraft zwischen den Maßstabsgliedern entsteht. Die Maßstabsglieder sind mit fortlaufenden, als Strichmarken und Zahlenangaben ausgebildeten Skalenmarkierungen 20 versehen. Das Endmaß 24 des Gliedermaßstabs wird durch die stirnseitigen Endflächen 22 der beiden Endglieder 16 definiert, die quer zur Längserstreckung des Endgliedes 16 verlaufen.

Eine Besonderheit der Erfindung besteht darin, dass die Skalenmarkierungen 20 als dauerhafte Vertiefungen 20', 20" in den Breitseitenflächen der Maßstabsglieder 14, 16 ausgebildet sind. Das Holz der Maßstabsglieder 14, 16 ist im Bereich der Vertiefungen 20', 20" dunkel verfärbt, so dass sich die Skalenmarkierungen 20 deutlich vom Holz der Maßstabsglieder abheben. Die Vertiefungen 20', 20" werden in die Breitseitenflächen 26 der als Flachstäbe ausgebildeten Maßstabsglieder 14, 16 thermisch eingraviert oder eingebrannt, wobei das Holz der Flachstäbe zugleich dunkel verfärbt wird. Das Eingravieren oder Einbrennen der Vertiefungen erfolgt mit einem computergesteuerten Laserstrahl, der beispielsweise mit einem als Beschriftungslaser ausgebildeten CO₂-Laser, YAG-Laser oder Diodenlaser erzeugt wird.

Die Maßstabsglieder tragen an ihren Oberflächen 26 eine Farb- und/oder Lackschicht 28, die das Erscheinungsbild verbessert. Die Farb- und Lackschicht 28 wird auf die die Maßstabsglieder 14, 16 bildenden Flachstäbe aufgetragen, bevor die Skalenmarkierungen 20 aufgebracht werden. Versuche haben gezeigt, dass die Farb- und Lackschicht beim Aufbringen der Skalenmarkierungen 20 mittels Laserstrahlen nicht zerstört, sondern stabilisiert wird. Dadurch kann die bisher übliche Fertigungsfolge, Färben - Drucken - Lackieren dahingehend geändert werden, dass zuerst in einem gemeinsamen Vorgang eine kombinierte Farb- und Lackschicht aufgetragen und anschließend die Skalenmarkierung aufgebracht wird. Aufgrund dieser Verfahrensumkehr ist es möglich, die mit den Farb- und Lackschichten vorkonfektionierten Flachstäbe zunächst unter Bildung eines Gliederstabs miteinander zu verbinden und anschließend mit den Skalenmarkierungen zu versehen. Dies gilt insbesondere dann, wenn die Vertiefungen der Skalenmarkierungen mit einem computergesteuerten Laserstrahl in die Flachstäbe eingraviert oder eingebrannt werden. Diese Arbeitsweise hat den Vorteil, dass sehr viel weniger unterschiedlich gestaltete Maßstabsglieder vorbereitet und gelagert werden müssen, um unterschiedliche Gliedermaßstäbe herzustellen. Dementsprechend lassen sich mit den erfindungsgemäßen Vorkehrungen wesentliche Einsparungen im Fertigungsablauf erzielen. Die Anbringung der Skalenmarkierungen erfolgt zum Schluss am fertigen Gliederstab und kann ganz individuell über eine geeignete Computersteuerung verändert werden.

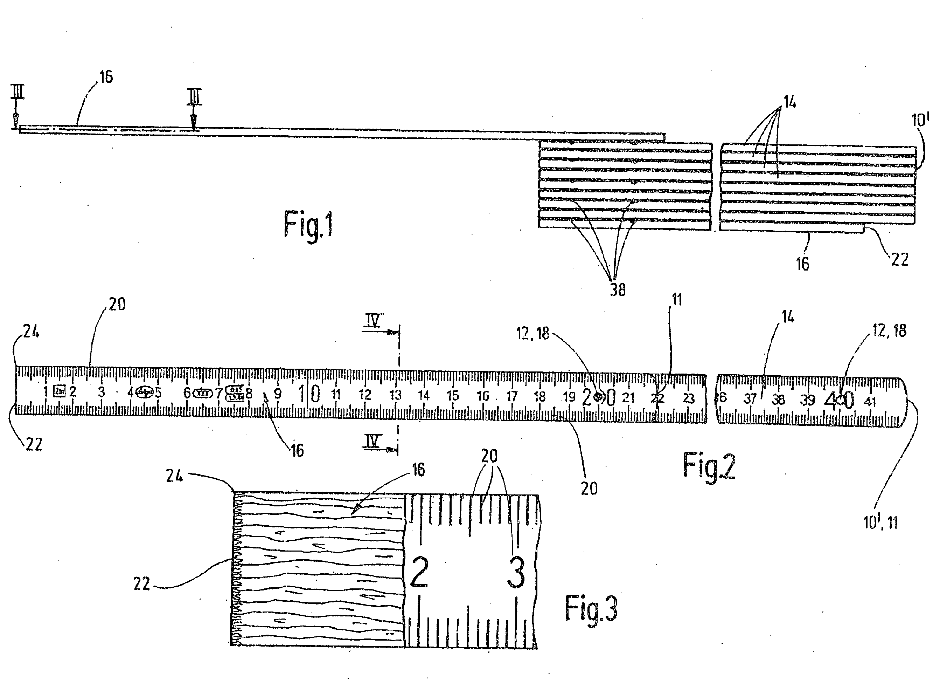

Eine weitere Besonderheit der Erfindung besteht darin, dass die Endflächen 22 der aus Holz bestehenden Endglieder frei liegen und exakt auf Endmaß gekürzt werden können. Außerdem sind die Endflächen 22 thermisch versiegelt und verdichtet (vgl. Fig. 3) und weisen dadurch eine erhöhte Verschleiß- und Stoßfestigkeit auf. Eine bevorzugte Ausgestaltung der Erfindung sieht vor, dass die das Endmaß 24 bildende Endfläche 22 der Endglieder 16 als unter der Einwirkung eines Laserstrahls erzeugte Trennfläche ausgebildet ist. Mit dieser Maßnahme wird einer bei Holzmaßstäben vorgeschriebenen Eigenschaft Rechnung getragen, dass die das Endmaß definierenden Begrenzungsflächen eine gegenüber dem Maßstabsholz erhöhte Verschleiß- und Stoßfestigkeit aufweisen.

Zusammenfassend ist folgendes festzuhalten: Die Erfindung bezieht sich auf die Herstellung eines Gliedermaßstabs aus Holz. Der Gliedermaßstab weist mehrere als langgestreckte Flachstäbe ausgebildete, mit fortlaufenden Skalenmarkierungen 20 versehene Maßstabsglieder 14, 16 auf, die paarweise an Rastgelenken miteinander verbunden sind. Die Erfindung sieht vor, dass die Skalenmarkierungen 20 durch dauerhafte Vertiefungen 20', 20" in den Breitseitenflächen der Maßstabsglieder gebildet und im Bereich der Vertiefungen dunkel verfärbt sind. Die Vertiefungen 20', 20" werden bevorzugt mit einem computergesteuerten Laserstrahl in das Holz der Flachstäbe eingraviert oder eingebrannt.

## Patentansprüche

1. Verfahren zur Herstellung von Gliedermaßstäben, bei welchem mehrere Flachstäbe aus Holz mit Skalenmarkierungen (20) versehen und unter Bildung von Rastgelenken (12, 18) paarweise miteinander verbunden werden, **dadurch gekennzeichnet, dass** die Skalenmarkierungen (20) unter Bildung von Vertiefungen (20', 20") in das Holz der Flachstäbe (14, 16) eingebrannt werden, wobei die Flachstäbe (14, 16) zunächst unter Bildung eines Gliederstabs paarweise miteinander verbunden und anschließend mit den Skalenmarkierungen (20) versehen werden.

2. Verfahren nach Anspruch 1, **dadurch gekennzeichnet, dass** das Holz der Flachstäbe (14, 16) beim Gravier- oder Einbrennvorgang dunkel verfärbt wird.

3. Verfahren nach Anspruch 1 oder 2, **dadurch gekennzeichnet dass** auf die Flachstäbe (14, 16) eine Lack- und/oder Farbschicht aufgetragen wird.

4. Verfahren nach Anspruch 3, **dadurch gekennzeichnet, dass** die Lack- und/oder Farbschicht (28) vor dem Gravier- oder Einbrennvorgang auf die Flachstäbe (14, 16) aufgetragen wird.

5. Verfahren nach einem der Ansprüche 1 bis 4, **dadurch gekennzeichnet, dass** die Vertiefungen (20', 20") mit einem computergesteuerten Laserstrahl in die Flachstäbe (14, 16) eingraviert oder eingebrannt werden.

6. Verfahren nach Anspruch 5, **dadurch gekennzeichnet, dass** zur Erzeugung des Laserstrahls ein Beschriftungslaser aus der Gruppe CO₂-Laser, YAG-Laser oder Dioden-Laser verwendet wird.

7. Verfahren nach einem der Ansprüche 1 bis 6, **dadurch gekennzeichnet, dass** im Zuge der Fertigung des Gliedermaßstabs (16) die beiden Endglieder an ihren freien stirnseitigen Enden (22) durch ein thermisches Trennverfahren auf Endmaß (24) abgelängt und zugleich an der Trennstelle thermisch porenversiegelt werden.

8. Verfahren nach Anspruch 7, **dadurch gekennzeichnet, dass** die Endglieder mittels eines über die Trennstelle bewegten Laserstrahls auf Endmaß (24) abgelängt und dabei thermisch porenversiegelt werden.

9. Verfahren nach einem der Ansprüche 1 bis 8, **dadurch gekennzeichnet, dass** die Flachstäbe (14, 16) des zusammengeklappten Gliedermaßstabs an ihren Schmalseiten mit mindestens einer stabübergreifenden Kantengravur versehen werden.

10. Verfahren nach Anspruch 9, **dadurch gekennzeichnet dass** die Kantengravur mit einem computergesteuerten Laserstrahl in die Schmalseiten der Flachstäbe (14, 16) eingebracht wird.

## Claims

1. Method for producing folding rules, in which a number of flat bars of wood are provided with scale markings (20) and are connected to one another in pairs to form fixed joints (12, 18), **characterized in that** the scale markings (20) are burned into the wood of the flat bars (14, 16) to form depressions (20', 20"), the flat bars (14, 16) first being connected to one another in pairs to form a folding bar and subsequently provided with the scale markings (20).

2. Method according to Claim 1, **characterized in that** the wood of the flat bars (14, 16) is darkly discoloured during the engraving or burning-in operation.

3. Method according to Claim 1 or 2, **characterized in that** a layer of varnish and/or paint is applied to the flat bars (14, 16).

4. Method according to Claim 3, **characterized in that** the layer of varnish and/or paint (28) is applied to the flat bars (14, 16) before the engraving or burning-in operation.

5. Method according to one of Claims 1 to 4, **characterized in that** the depressions (20', 20") are engraved or burned into the flat bars (14, 16) by a computer-controlled laser beam.

6. Method according to Claim 5, **characterized in that** an inscribing laser from the group comprising CO2 lasers, YAG lasers and diode lasers is used for producing the laser beam.

7. Method according to one of Claims 1 to 6, **characterized in that**, in the course of producing the folding rule (16), the two end pieces are cut to length to the final size (24) at their free butt ends (22) by a thermal cutting method and at the same time are thermally pore-sealed at the cutting point.

8. Method according to Claim 7, **characterized in that** the end pieces are cut to length to the final size (24) by means of a laser beam moved over the cutting point and are thereby thermally pore-sealed.

9. Method according to one of Claims 1 to 8, **characterized in that** the flat bars (14, 16) of the folded-together folding rule are provided on their narrow sides with at least one edge engraving extending over the bars.

10. Method according to Claim 9, **characterized in that** the edge engraving is introduced into the narrow sides of the flat bars (14, 16) by a computer-controlled laser beam.

## Revendications

1. Procédé de fabrication de mètres pliants dans lequel on munit plusieurs règles plates en bois de marquages gradués (20) et en formant des articulations à verrouillage (12, 18) on les assemble par paires les unes aux autres, **caractérisé en ce qu'**on pyrograve les marquages gradués (20) en formant des creux (20', 20") dans le bois des règles plates (14, 16), les règles plates (14, 16) étant d'abord assemblées par paires les unes aux autres, en formant un mètre pliant, puis munies de marquages gradués (20).

2. Procédé selon la revendication 1, **caractérisé en ce que** le bois des règles plates (14, 16) adopte une teinte foncée lors du processus de gravure ou de pyrogravure.

3. Procédé selon la revendication 1 ou 2, **caractérisé en ce qu'**on applique sur les règles plates (14, 16) une couche de vernis et/ou de peinture.

4. Procédé selon la revendication 3, **caractérisé en ce qu'**on applique la couche de vernis et/ou de peinture (28) avant le processus de gravure ou de pyrogravure sur les règles plates (14, 16).

5. Procédé selon l'une quelconque des revendications 1 à 4, **caractérisé en ce qu'**on grave ou on pyrograve les creux (20', 20") dans les règles plates (14, 16) avec un faisceau laser commandé par ordinateur.

6. Procédé selon la revendication 5, **caractérisé en ce que** pour créer le faisceau laser, on utilise un laser d'inscription du groupe des lasers CO₂, lasers YAG ou lasers à diode.

7. Procédé selon l'une quelconque des revendications 1 à 6, **caractérisé en ce qu'**au fur et à mesure de la fabrication du mètre pliant (16) on coupe à leur longueur finale (24) les deux éléments d'extrémité au niveau de leurs extrémités frontales libres (22) par un procédé de découpe thermique et en même temps on en scelle thermiquement les pores sur les points de sectionnement.

8. Procédé selon la revendication 7, **caractérisé en ce qu'**on coupe à leur longueur finale (24) les éléments d'extrémité au moyen d'un faisceau laser déplacé sur le point de sectionnement et on en scelle thermiquement les pores à cet effet.

9. Procédé selon l'une quelconque des revendications 1 à 8, **caractérisé en ce qu'**on munit les règles plates (14, 16) du mètre pliant replié sur leurs côtés étroits d'au moins une gravure de lisière chevauchant les règles.

10. Procédé selon la revendication 9, **caractérisé en ce qu'**on ménage la gravure de lisière à l'aide d'un faisceau laser commandé par ordinateur dans les côtés étroits des règles plates (14, 16).
